# EUROPÄISCHE PATENTSCHRIFT

(11) **EP 2 960 543 B1**
(45) Veröffentlichungstag und Bekanntmachung des Hinweises auf die Patenterteilung: **12.07.2023**
(21) Anmeldenummer: 15168732.4
(22) Anmeldetag: 21.05.2015
(51) Int. Cl.: F16F 13/10

(54) **ENTKOPPELTES HYDROLAGER**
DECOUPLED HYDRAULIC SUPPORT
SUPPORT HYDRAULIQUE AUTONOME

(30) Priorität: 24.06.2014 DE 102014108840
(43) Veröffentlichungstag der Anmeldung: 30.12.2015
(73) Patentinhaber: Vibracoustic SE, 64293 Darmstadt (DE)
(72) Erfinder: Beckmann, Wolfgang, 64289 Darmstadt (DE); Lobmüller, Günter, 69509 Mörlenbach (DE); Holz, Roland, 64658 Fürth (DE); Farrenkopf, Peter, 68519 Viernheim (DE)
(74) Vertreter: Patentanwälte Olbricht Buchhold Keulertz

(56) Entgegenhaltungen:
- WO-A1-2013/161992
- US-A1- 2010 072 683
- US-A1- 2012 049 423
- US-A1- 2012 299 229
- US-A1- 2013 069 289

## Beschreibung

### Technisches Gebiet

Die vorliegende Erfindung betrifft ein entkoppeltes Hydrolager mit einer Arbeitskammer und einer Ausgleichskammer, die durch eine Trennwand mit einem Dämpfungskanal getrennt sind, wobei die Trennwand aus zwei Düsenscheiben mit einer zwischen den Düsenscheiben angeordneten Membran besteht, wobei die Membran mit mindestens einem Ventil ausgestattet ist, welches bei einem Überdruck in der Arbeitskammer mit Bezug zur Ausgleichskammer geschlossen ist und das bei Unterdruck in der Arbeitskammer mit Bezug zur Ausgleichskammer selbsttätig öffnet.

Die aus einem Elastomer bestehende Tragfeder im Traglager des Hydrolagers in Verbindung mit der hydraulischen Flüssigkeit in der Arbeitskammer und in der Ausgleichskammer, sowie im Dämpfungskanal und in den Düsenscheiben bestimmen das Feder- und Dämpfungsverhalten des Hydrolagers. In Abhängigkeit von der Frequenz und der Amplitude der Schwingungen, ausgelöst vom Motorverhalten, entstehen unterschiedliche Messkurven der dynamischen Steifigkeit. Im Allgemeinen werden vom Motor ausgehende niederfrequente Schwingungen großer Amplituden durch eine Flüssigkeitsverlagerung innerhalb des Dämpfungskanals gedämpft. Eine Isolierung von hochfrequenten Schwingungen mit kleinen Amplituden erfolgt durch die innerhalb der Trennwand angeordnete Membran. In den meisten Fällen wird eine Isolierung bei Amplituden von + / - 0,2 mm und bei Frequenzen bis zu circa 25 Hz erreicht, während die Dämpfung bei darüber liegenden Amplituden durchgeführt wird. Dabei kann die Membran lose mit Spiel oder auch geklemmt zwischen den Düsenscheiben gehalten sein. Unabhängig hiervon liegt bei beiden Ausführungsformen eine hohe dynamische Steifigkeit vor. Insbesondere bei geklemmten Membranen sinkt die Steifigkeit bei einer Frequenz von 6 bis 7 Hz stark ab, was zu einer Verschlechterung beim Stuckerverhalten führt. Durch eine Freigabe der Klemmung der Membran kann die Absenkung der Steifheit reduziert werden, was jedoch im Leerlaufbetrieb zu einer Steifigkeitserhöhung fürht und damit einhergehend zu einer Verschlechterung des Leerlaufverhaltens. Um hier eine Verbesserung zu erreichen, werden schaltbare Hydrolager verwendet bei denen zentral mittig in der Trennwand eine verschließbare Durchtrittsöffnung für das Fluid vorgesehen ist, die im Leerlauf geöffnet wird und auf diese Weise einen Tilgerkanal für das Fluid bildet und dadurch die dynamische Steifigkeit in dem relevanten Frequenzbereich reduziert. Zum Teil werden diese Schaltlager mit automatischer Membran-Spiel-Verstellung ausgeführt und die Membran mit dem Öffnen der Durchtrittsöffnung festgeklemmt.

### Stand der Technik

Der Aufbau eines entkoppelten Hydrolagers ist beispielweise der DE 30 19 337 C2 zu entnehmen. Der Aufbau eines schaltbaren Hydrolagers ist in der DE 41 41 332 C2 gezeigt.

Aus US 2010/0072683 A1 geht ein Hydrolager hervor, das eine Arbeitskammer und eine Ausgleichskammer aufweist, die durch eine Trennwand mit einem Dämpfungskanal voneinander getrennt sind, wobei die Trennwand aus zwei Düsenscheiben gebildet ist. Zwischen den beiden Düsenscheiben ist eine Membran angeordnet, die ein Ventil aufweist, das bei einem Überdruck in der Arbeitskammer geschlossen ist und bei einem Unterdruck in der Arbeitskammer selbsttätig öffnet.

Ferner gehen aus WO 2013/161992 A1, US 2013/0069289 A1, US 2012/0299229 A1 und US 2012/0049423 A1 Hydrolager mit einer zwischen zwei Düsenscheiben angeordneten Membran hervor, die ein Ventil aufweist, das bei einem Überdruck in der Arbeitskammer geschlossen ist und bei einem Unterdruck in der Arbeitskammer selbsttätig öffnet.

### Darstellung der Erfindung

Der Erfindung liegt die Aufgabe zu Grunde, ein entkoppeltes Hydrolager zu schaffen, welches ein verbessertes Verhalten bei niedrigen Frequenzen hat. Insbesondere soll ein starkes Absenken der dynamischen Steifigkeit bei Frequenzen von unter 10 Hz vermieden werden. Außerdem wird angestrebt generell in dem Bereich eine Absenkung der dynamischen Steifigkeiten zu erreichen.

Die Lösung der gestellten Aufgabe wird bei einem entkoppelten Hydrolager der eingangs genannten Gattung dadurch erreicht, dass das Ventil bei Frequenzen der Membran von 1 bis 15 Hz und bei Amplituden der Membran von 0.05 bis 10mm öffnet. Es zeigte sich, dass sich durch diese relativ einfache Maßnahme eine deutliche Reduzierung der dynamischen Steifigkeit erreicht wird und dass außerdem ein sehr gleichmäßiger Verlauf der dynamischen Steifigkeit unterhalb des Maximums der Resonanzfrequenz der hydraulischen Dämpfung eintritt und dieses bei geklemmter Membran. Mit steigender Frequenz wird der Öffnungsspalt des Ventils geringer bis etwa 50 Hz, bei denen das Ventil geschlossen bleibt.

Das Ventil ist so ausgebildet, dass es bei Unterdruck in der Arbeitskammer öffnet und bei Überdruck in der Arbeitskammer geschlossen ist. Die Ausdrücke Unterdruck und Überdruck beziehen sich hier auf die Druckdifferenz, welche zwischen der Arbeitskammer und der Ausgleichskammer durch Schwingungen hervorgerufen wird. Der Unterdruck entsteht, wenn das Fluid im Dämpfungskanal Resonanzschwingungen erreicht hat. Bei dem Maximum der Resonanzschwingungen ist das Ventil voll geöffnet.

Das Ventil ist als Rückschlagventil ausgebildet, dabei bevorzugt als Klappenventil mit seitlich angeordneter Schwenkachse. Es ist günstig, die Klappe des Ventils in einer Zungenform auszubilden, bei der die Zungenspitze halbkreisförmig ist. Der Zungenmittelteil erweitert sich zur Schwenkachse der Klappe hin konusartig. Oberhalb des Ventils hat die obere Düsenscheibe eine Öffnung die einen freien Ausschlag der Ventilklappe in Richtung der Arbeitskammer zulässt. Unterhalb der Ventilklappe ist in der unteren Düsenscheibe ein Durchlass vorhanden, der deutlich kleiner ist, als die Öffnung in der oberen Düsenscheibe, sodass die Ventilklappe bei geschlossenem Ventil an der unteren Düsenscheibe anliegt und den Durchlass überdeckt.

In Versuchen zeigte sich, dass auch bei schaltbaren Hydrolagern mit einem zentralen Durchlass in der Düsenscheibe bei Leerlauf des Motors eine Verbesserung der Steifigkeit erreicht wird. In dem bei Leerlauf vorliegenden Frequenzbereich von circa 40 bis 70 Herz entsteht ebenfalls ein flacherer Verlauf der dynamischen Steifigkeit.

### Kurzbeschreibung der Zeichnung

Anhand eines Ausführungsbeispiels wird die Erfindung nachstehend näher erläutert.

Es zeigt,
- Fig. 1: einen Schnitt durch ein entkoppeltes Hydrolager mit zwei Ventilen in der Trennwand,
- Fig. 2: die Trennwand aus der Figur 1 in vergrößerter Darstellung,
- Fig. 3: im Schnitt die Ausbildung eines Klappenventils,
- Fig. 4: eine grafische Darstellung des Verlaufs der dynamischen Steifigkeit gemäß der Erfindung im Vergleich zu einem Verlauf gemäß dem Stand der Technik und
- Fig. 5: ebenfalls in grafischer Darstellung den Verlauf der dynamischen Steifigkeit im Vergleich zum Verlauf der dynamischen Steifigkeit gemäß Stand der Technik im Leerlauf.

### Ausführung der Erfindung

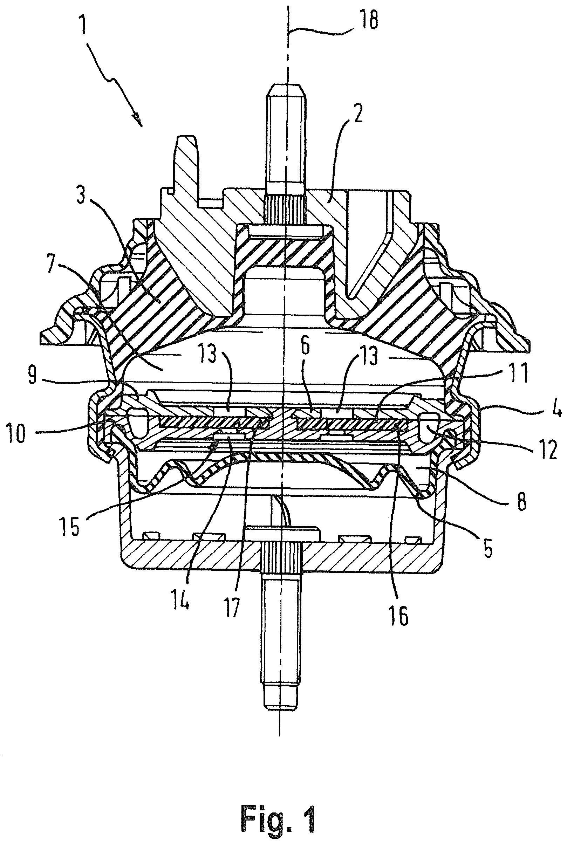

In der Figur 1 ist ein entkoppeltes Hydrolager 1 im Längsschnitt dargestellt. Das Hydrolager 1 bestehend im Wesentlichen aus dem Traglager 2 mit der Tragfeder 3 und dem Auflager 4 mit dem Rollbalg 5. Im Auflager 4 ist die Trennwand 6 untergebracht, welche die Arbeitskammer 7 von der Ausgleichskammer 8 trennt. Die Trennwand 6 besteht aus der oberen Düsenscheibe 9 und der unteren Düsenscheibe 10. Zwischen die Düsenscheiben 9, 10 ist die Membran 11 angeordnet. Außerdem ist in der Trennwand 6 der Dämpfungskanal 12 untergebracht. Arbeitskammer 7 und Ausgleichskammer 8 sind mit einem Fluid gefüllt und über den Dämpfungskanal 12 hydraulisch miteinander verbunden. Die Düsenscheiben 9, 10 sind jeweils mit zueinander fluchtenden Öffnungen 13, 14 versehen, sodass das Fluid sowohl von der Arbeitskammer 7 als auch der Ausgleichskammer 8 zugang zur Membran 11 hat. Im vorliegenden Beispiel sind die Öffnungen 13 in der oberen Düsenscheibe 9 unverändert, während zumindest ein Teil der Öffnungen 14 in der unteren Düsenscheibe 10 deutlich kleiner sind als die zugehörigen Öffnungen 13 in der oberen Düsenscheibe 9. Im Bereich dieser Öffnungen 13, 14 sind die Ventile 15 eingesetzt. Hierfür ist ein Teil der Membran 11 im Bereich der Öffnungen 13, 14 durchschnitten, sodass Klappenventile in Zungenform entstehen. Durch die verkleinerte Ausbildung der Öffnungen 14 im Vergleich zu den Öffnungen 13 können diese Klappenventile nur nach oben öffnen. Im geschlossenen Zustand liegen die Klappen der Ventile 15 an der Innenwand der unteren Düsenscheibe 10 mit den kleineren Öffnungen 14 an. Bei einem Auftreten von Schwingungen kann das Ventil 15 folglich nur öffnen, wenn der Druck in der Arbeitskammer 7 geringer ist als in der Ausgleichskammer 8. Die Wirksamkeit der Klappen 19 liegt in einem Frequenzbereich von 1 bis 15 Herz bei Amplituden der Membran von 0,05 bis 10 mm. Dabei ist es möglich, die Trennwand 6 mit nur einer Öffnung mit einem Ventil 15 zu versehen oder auch mehrere beziehungsweise alle Öffnungen 13, 14.

Die Einklemmung der Membran 11 kann sowohl an ihrem Außenrand 16 als auch zusätzlich noch im Innenbereich 17 erfolgen.

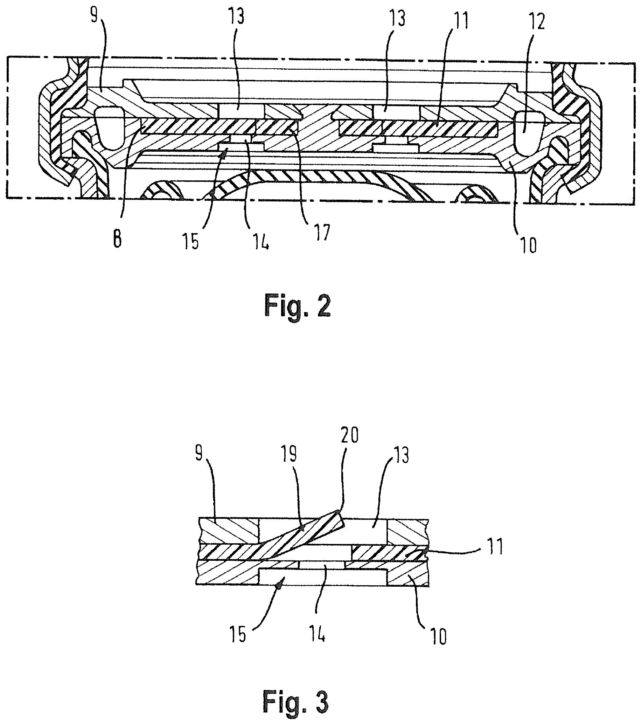

Die Figur 2 zeigt die Trennwand in vergrößerter Ausführung um die Ausbildung und Anordnung der Ventile 15 darzustellen.

Die Figur 3 zeigt einen Schnitt durch ein geöffnetes Ventil 15. Die Klappe 19 des Ventils 15 ist in Zungenform ausgebildet, dabei ist die Zungenspitze 20 halbkreisförmig und die Zunge 19 selbst zur Schwenkachse der Klappe hin konusartig erweitert.

Bei einer Ausführungsform für ein schaltbares Hydrolager haben die Düsenscheiben mittig einen verschließbaren Durchlass. Dabei sind vier Öffnungen 13, 14 vorhanden, die zueinander fluchten. Außerdem hat die obere Düsenscheibe 9 zwei sich gegenüber liegende Öffnungen 13 gleicher Größe und die untere Düsenscheibe 10 zwei sich gegenüberliegende Öffnungen, die jedoch verkleinert sind und von den Ventilklappen 19 überdeckt werden. Die Ventilklappen 19 sind aus der nur etwa 1 mm dicken Membran 11 durch Durchstechen an drei Seiten ausgestanzt.

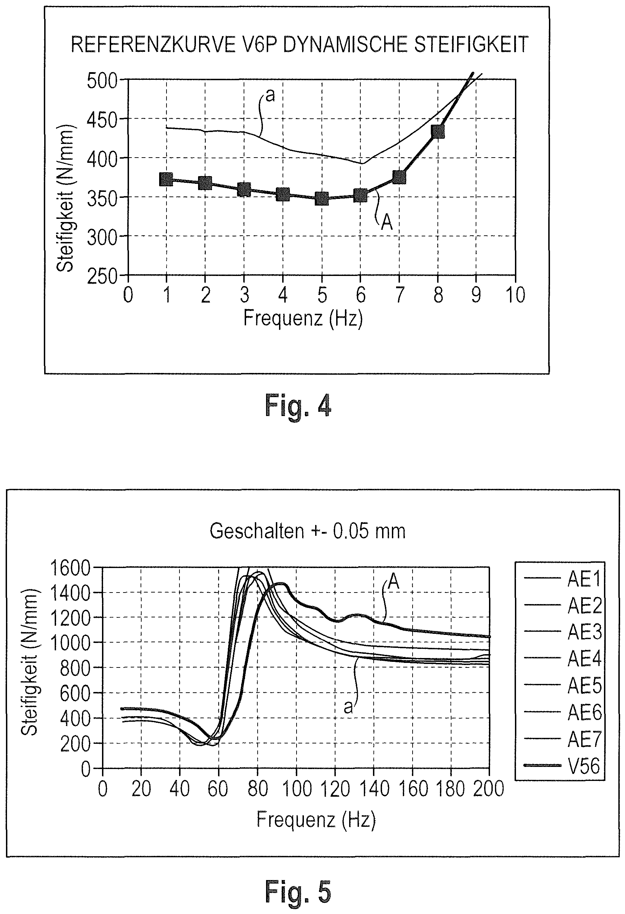

In der Figur 4 ist das bei der dynamischen Steifigkeit erreichte Ergebnis in Bezug zum Stand der Technik eingezeichnet. Die obere Kurve a zeigt den Verlauf des Standes der Technik, während die untere Kurve A den Verlauf der dynamischen Steifigkeit zeigt, die mit der vorliegenden Erfindung erreichbar ist. Eine deutliche Absenkung der Steifigkeit und auch ein gleichmäßigerer Verlauf der Steifigkeit ist sichtbar.

Die Figur 5 zeigt den Einfluss der Erfindung beim Leerlauf in dem dafür gegebenen Frequenzbereich. Es ist sichtbar, dass auch hier eine Verbesserung der dynamischen Steifigkeit erreicht wurde. Die Steifigkeit A verläuft gleichmäßig und das Maximum liegt niedriger.

## Patentansprüche

1. Entkoppeltes Hydrolager (1) mit einer Arbeitskammer (7) und einer Ausgleichskammer (8), die durch eine Trennwand (6) mit einem Dämpfungskanal (12) getrennt sind, die aus zwei Düsenscheiben (9, 10) und einer dazwischen angeordneten Membran (11) besteht, und wobei die Membran (11) mindestens ein Ventil (15) aufweist, das bei einem Überdruck in der Arbeitskammer (7) mit Bezug zur Ausgleichskammer (8) geschlossen ist und das bei einem Unterdruck in der Arbeitskammer (7) mit Bezug zur Ausgleichskammer (8) selbsttätig öffnet, **dadurch gekennzeichnet, dass** das Ventil (15) bei Frequenzen der Membran (11) von 1 bis 15 Hz und bei Amplituden der Membran (11) von 0,05 bis 10 mm öffnet.

2. Hydrolager nach Anspruch 1, **dadurch gekennzeichnet, dass** die Membran (11) geklemmt ist.

3. Hydrolager nach Anspruch 1 oder 2, **dadurch gekennzeichnet, dass** der Unterdruck in der Arbeitskammer (7) durch Resonanzschwingungen des Fluids im Dämpfungskanal (12) entsteht.

4. Hydrolager nach den Ansprüchen 1 bis 3, **dadurch gekennzeichnet, dass** das Ventil (15) als Rückschlagventil ausgebildet ist.

5. Hydrolager nach Anspruch 4, **dadurch gekennzeichnet, dass** das Ventil (15) ein Klappenventil mit seitlich zur Mittelachse (18) des Hydrolagers (1) gerichteter Schwenkachse ist.

6. Hydrolager nach Anspruch 5, **dadurch gekennzeichnet, dass** die Klappe (19) des Ventils (15) eine Zungenform hat.

7. Hydrolager nach Anspruch 6, **dadurch gekennzeichnet, dass** die Zungenspitze (20) halbkreisförmig ist.

8. Hydrolager nach Anspruch 5 oder 6, **dadurch gekennzeichnet, dass** die Zunge sich zur Schwenkachse der Klappe hin konusartig erweitert.

9. Hydrolager nach den Ansprüchen 5 bis 8, **dadurch gekennzeichnet, dass** oberhalb des Ventils (15) eine Öffnung (13) in der oberen Düsenscheibe (9) vorhanden ist, die einen freien Ausschlag der Ventilklappe (19) in Richtung der Arbeitskammer (7) zulässt.

10. Hydrolager nach den Ansprüchen 5 bis 9, **dadurch gekennzeichnet, dass** unterhalb der Ventilklappe (19) in der unteren Düsenscheibe (10) eine Öffnung (14) für das Fluid vorhanden ist.

11. Hydrolager nach den Ansprüchen 5 bis 10, **dadurch gekennzeichnet, dass** die Ventilklappe (19) bei Überdruck in der Arbeitskammer (7) gegenüber der Ausgleichskammer (8) an der unteren Düsenscheibe (10) anliegt und die Öffnung (14) überdeckt.

12. Hydrolager nach den Ansprüchen 1 bis 11, **dadurch gekennzeichnet, dass** das Hydrolager (1) ein schaltbares Hydrolager (1) mit einem zentralen Durchlass in der Düsenscheibe (9, 10) ist, der im Leerlauf des Motors geöffnet ist.

## Claims

1. Decoupled hydraulic support (1) having a working chamber (7) and a compensation chamber (8) which are separated by a partition (6) with a damping channel (12), the partition consisting of two nozzle discs (9, 10) and a diaphragm (11) arranged therebetween, and wherein the diaphragm (11) has at least one valve (15) which is closed in the event of an overpressure in the working chamber (7) with respect to the compensation chamber (8) and which opens automatically in the event of a negative pressure in the working chamber (7) with respect to the compensation chamber (8), **characterized in that** the valve (15) opens at frequencies of the diaphragm (11) of 1 to 15 Hz and at amplitudes of the diaphragm (11) of 0.05 to 10 mm.

2. Hydraulic support according to claim 1, **characterized in that** the diaphragm is clamped.

3. Hydraulic support according to claim 1 or 2, **characterized in that** the negative pressure in the working chamber (7) is produced by resonant oscillations of the fluid in the damping channel (12).

4. Hydraulic support according to claims 1 to 3, **characterized in that** the valve (15) is designed as a check valve.

5. Hydraulic support according to claim 4, **characterized in that** the valve (15) is a flap valve with a pivot axis directed laterally to the center axis (18) of the hydraulic support (1).

6. Hydraulic support according to claim 5, **characterized in that** the flap (19) of the valve (15) has a tongue shape.

7. Hydraulic support according to claim 6, **characterized in that** the tip of the tongue (20) is semicircular.

8. Hydraulic support according to claim 5 or 6, **characterized in that** the tongue widens conically towards the pivot axis of the valve.

9. Hydraulic support according to claims 5 to 8, **characterized in that** above the valve (15) there is an opening (13) in the upper nozzle disc (9) which permits free deflection of the valve flap (19) in the direction of the working chamber (7).

10. Hydraulic support according to Claims 5 to 9, **characterized in that** an opening (14) for the fluid is provided below the valve flap (19) in the lower nozzle disc (10).

11. Hydraulic support according to claims 5 to 10, **characterized in that** the valve flap (19) bears against the lower nozzle disk (10) in the event of overpressure in the working chamber (7) relative to the compensation chamber (8) and covers the opening (14).

12. Hydraulic support according to claims 1 to 11, **characterized in that** the hydraulic support (1) is a switchable hydraulic support (1) with a central passage in the nozzle disc (9, 10) which is open when the engine is idle.

## Revendications

1. Support hydraulique autonome (1) avec une chambre de travail (7) et une chambre de compensation (8), qui sont séparées par une paroi de séparation (6) avec un canal d'amortissement (12), la paroi de séparation se composant de deux disques à buses (9, 10) et d'une membrane (11) disposée entre eux, et dans lequel la membrane (11) présente au moins une soupape (15), qui est fermée en cas de surpression dans la chambre de travail (7) par rapport à la chambre de compensation (8) et qui s'ouvre automatiquement en cas de dépression dans la chambre de travail (7) par rapport à la chambre de compensation (8), **caractérisée en ce que** la soupape (15) s'ouvre pour des fréquences de la membrane (11) de 1 à 15 Hz et pour des amplitudes de la membrane (11) de 0,05 à 10 mm.

2. Support hydraulique selon la revendication 1, **caractérisé en ce que** la membrane est serrée.

3. Support hydraulique selon la revendication 1 ou 2, **caractérisé en ce que** la dépression dans la chambre de travail (7) est générée par des oscillations de résonance du fluide dans le canal d'amortissement (12).

4. Support hydraulique selon les revendications 1 à 3, **caractérisé en ce que** la soupape (15) est conçue comme un clapet anti-retour.

5. Support hydraulique selon la revendication 4, **caractérisé en ce que** la soupape (15) est une soupape à clapet dont l'axe de pivotement est orienté latéralement par rapport à l'axe central (18) du support hydraulique (1).

6. Support hydraulique selon la revendication 5, **caractérisé en ce que** le clapet (19) de la soupape (15) a une forme de languette.

7. Support hydraulique selon la revendication 6, **caractérisé en ce que** la pointe de la languette (20) est en forme de demi-cercle.

8. Support hydraulique selon la revendication 5 ou 6, **caractérisé en ce que** la languette s'élargit en forme de cône vers l'axe de pivotement du clapet.

9. Support hydraulique selon les revendications 5 à 8, **caractérisé en ce qu'**il existe au-dessus de la soupape (15) une ouverture (13) dans le disque supérieur de buse (9), qui permet un libre débattement du clapet (19) en direction de la chambre de travail (7).

10. Support hydraulique selon les revendications 5 à 9, **caractérisé en ce qu'**une ouverture (14) pour le fluide est prévue dans le disque à buses inférieur (10), en dessous du clapet de soupape (19).

11. Support hydraulique selon les revendications 5 à 10, **caractérisé en ce qu'**en cas de surpression dans la chambre de travail (7) par rapport à la chambre de compensation (8), le clapet de soupape (19) s'applique contre le disque de buse inférieur (10) et recouvre l'ouverture (14).

12. Support hydraulique selon les revendications 1 à 11, **caractérisé en ce que** le support hydraulique (1) est un support hydraulique commutable (1) avec un passage central dans le disque à buses (9, 10), qui est ouvert lorsque le moteur tourne au ralenti.
